# EUROPEAN PATENT SPECIFICATION

(11) **EP 0 379 472 B1**
(45) Date of publication and mention of the grant of the patent: **16.03.1994**
(21) Application number: 90830015.5
(22) Date of filing: 16.01.1990
(51) Int. Cl.: B01D 47/06, A61C 3/025, B24C 7/00

(54) **Device for cleansing air discharged from a sand-blasting chamber and a micro-sandblasting machine**
Mikrosandstrahlmaschine und Einrichtung zur Reinigung von Abluft aus einer Mikro-Sandstrahlkammer
Machine à jet de sable et dispositif pour la purification de l'air sortant d'une chambre de sablage

(30) Priority: 18.01.1989 IT 6702889
(43) Date of publication of application: 25.07.1990
(73) Proprietor: C.I.E. DENTALFARM S.r.l., 10138 Torino (IT)
(72) Inventor: Mini, Giorgio, I-10100 Torino (IT)
(74) Representative: Rambelli, Paolo

(56) References cited:
- DE-A- 3 323 486
- DE-A- 3 737 500
- FR-A- 2 446 124
- US-A- 3 811 249

## Description

### A device for cleansing air discharged from a sand-blasting chamber and a micro-sandblasting machine provided with the device

The present invention relates to a cleansing device for association with a sandblasting machine of the type indicated in the pre-characterising portion of claim 1.

A device of this type is described in Italian patent No. 1,117,569 filed by the Applicant. According to this patent, the discharge duct opens into a horizontal cylindrical chamber which communicates with a subsequent duct having a first vertical portion and a second horizontal portion and containing internal means for increasing the turbulence of the flow. The water supplied to the discharge duct comes from a suitable reservoir or from the water mains.

Such a device has the disadvantage both of a certain structural complexity and of the need to provide for the frequent replenishing of the water contained in the reservoir and for the emptying of the collecting reservoir in which the washing water and the dirt resulting from the washing accumulate. If the water reservoir is to be eliminated, it is necessary to provide a connection to the water mains. For optimal operation, the device according to the aforementioned patent also requires particularly accurate installation and frequently needs the use of skilled labour.

A cleansing device for use in heating plants is known from DE-A-37 37 500 wherein a vertical duct opens into a liquid/air separation chamber. A nozzle disposed at the very top of the duct provides a flow of atomised water which is sucked from the separation chamber by means of a rotary pump.

The object of the present invention is to provide a cleansing device which does not have the above problems and which is simple and cheap to produce and install.

According to the invention, this object is achieved by the features set forth in the characterising portion of claim 1.

As well as ensuring a compact shape which can easily be associated with a sandblasting machine, the characteristics of the device according to the invention also enable the air discharged from the sandblasting machine to be cleaned effectively over a long period without the need for frequent replenishment of the water and/or frequent cleaning of the container for collecting the dirt. A further advantage of the device according to the invention is that it does not require particularly careful installation, since the device is supplied together with the sandblasting machine and constitutes an integral part thereof.

Further characteristics and advantages of a cleansing device according to the invention will become clear from the detailed description which follows with reference to the appended drawings, provided by way of non-limiting example, in which:

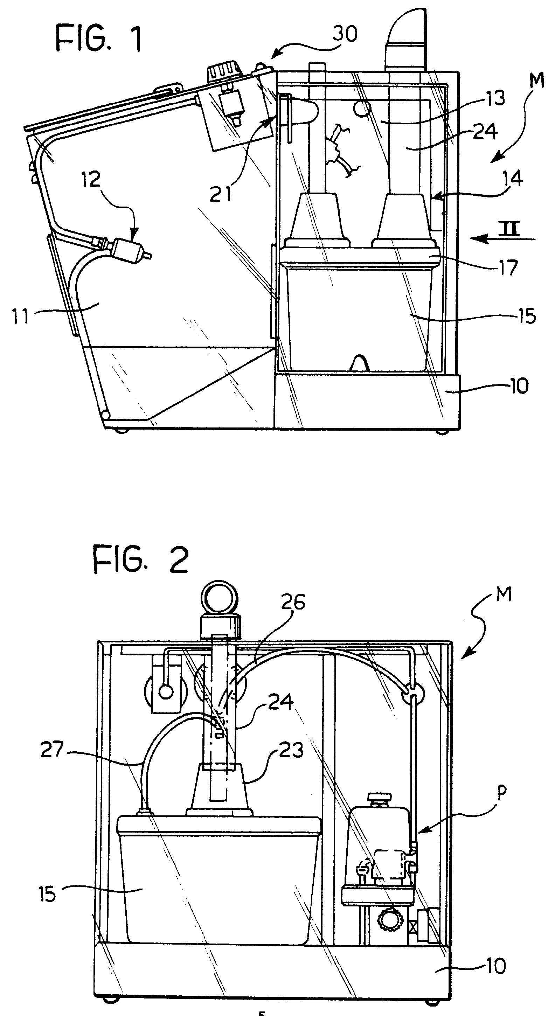

Figure 1 is a sectioned side view of a sandblasting machine according to the invention,
Figure 2 is a view taken on the arrow II of Figure 1,

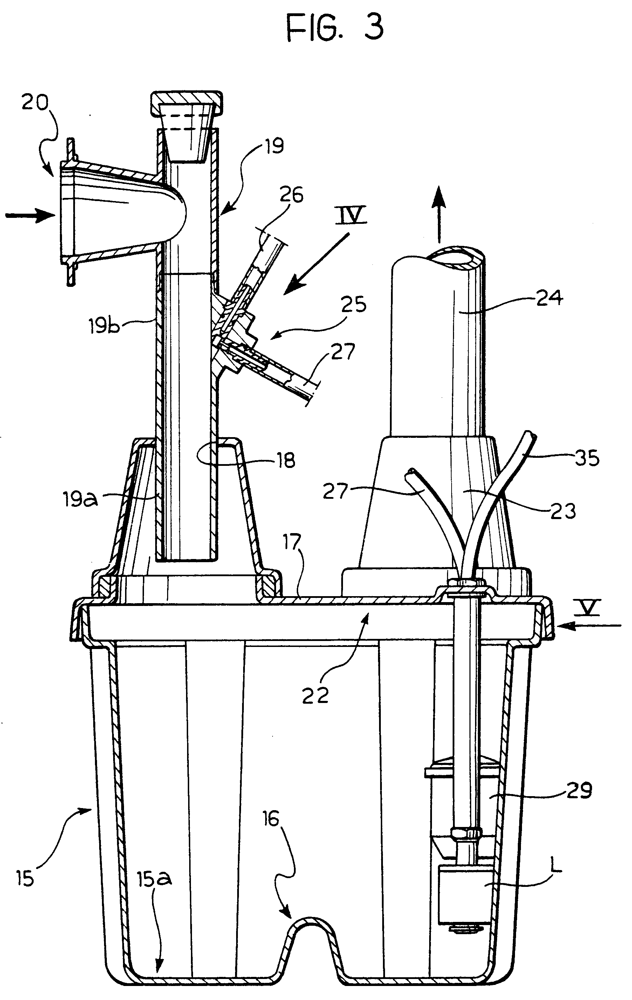

Figure 3 is a partially-sectioned side view of the cleansing device associated with the machine of Figure 1,

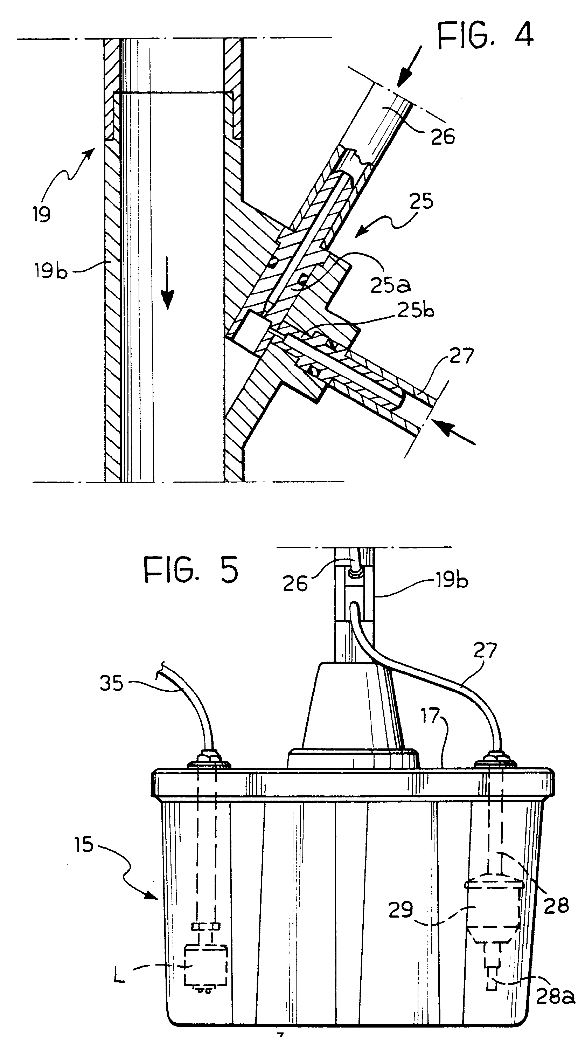

Figure 4 is a detail of Figure 3 on an enlarged scale, and
Figure 5 is a view taken on the arrow V of the cleansing device of Figure 3.

With reference to the drawings, a sandblasting machine is generally indicated M and comprises a support structure 10, a sandblasting chamber 11, a sandblasting nozzle 12 arranged within the chamber 11, and an auxiliary chamber 13 situated behind the sandblasting chamber 11 and containing a device for cleaning the air 14 discharged from the sandblasting chamber 11.

The cleansing device 14 comprises a container 15 with a base wall 15a and a lid 17. The latter has a first aperture 18 in which is mounted one end 19a of a vertical discharge duct 19 having an upper lateral opening 20 connected at 21 to the sandblasting chamber 11. A second aperture 22 in the lid 17 is connected at 23 to a vent pipe 24 which projects upwardly from the structure 10 of the machine M.

The discharge duct 19 has a central portion 19b which has an associated ejector device 25 comprising a first nozzle 25a and a second nozzle 25b. The first nozzle 25a, for the primary fluid of the ejector, is arranged along an axis inclined to the axis of the duct 19 and faces towards the container 15. The first nozzle 25a is connected by a flexible tube 26 to a pressure reducer P with which the sandblasting machine M is provided. The second nozzle 25b, for the secondary fluid of the ejector, is perpendicular to the first nozzle 25a and is connected by a flexible tube 27 to an immersed tube 28 fixed at its upper end to the lid 17 of the container 15 and having its lower end 28a arranged substantially at the bottom of the container. A filter 29 is also mounted in the immersed tube 28.

To advantage, a level-monitoring device L of the floating type may also be associated with the container 15, particularly with its lid 17, to provide signals indicative of the level of the water in the container. When the level falls below a predetermined value, the level monitor L lights a lamp 30 arranged, for example, on the control panel of the sandblasting machine M, by means of an electrical cable 35.

During the operation of the sandblasting machine M, the powders discharged from the chamber 11 with the air flow (the powders being constituted essentially by powdered abrasives and powdered materials resulting from the cleaning of precious-metal objects used in dental mechanics for the preparation of dental prostheses, or in goldwork for the making of jewellery and the like) are directed into the discharge duct 19 to which atomised water is supplied by means of the ejector device 25. The particular arrangement of the ejector 25 enables an intimate mixing of the air from the sandblasting chamber 11 and the washing water, enabling the latter to capture the particles of dust and to collect at the bottom of the container 15. The ejector draws the atomised water through the tube 27 directly from the container which therefore requires occasional refilling the need for which is signalled by the lamp 30. The cleansed air is discharged from the container 15 through the pipe 24.

When refilling the container 15 with liquid, the operator simultaneously cleans out the dirt at the bottom of the container. The presence of a transverse wall 16 enables the accumulation of dirt to be limited to one portion of the bottom of the container, thus avoiding the risk of blockage of the filter 29 associated with the tube 28.

The cleansing device may be applied to different kinds of sandblasting machines, for example, a roughing machine in which the abrasive is recycled, or a finishing machine in which the abrasive is not reused.

## Claims

1. A cleansing device for association with a sandblasting machine for use in dental mechanics, of the type comprising:
- a substantially vertical air-discharge duct (19) which communicates with the sandblasting chamber of the machine,
- a liquid-air separation chamber (15) which communicates with the duct (19), and
- a recycling connection (25b, 27, 28) provided between the separation chamber (15) and the discharge duct (19), characterised in that it includes an ejector device (25) which communicates with the discharge duct (19) and has compressed air as a primary fluid and liquid drawn from the separation chamber (15) as a secondary fluid, said ejector device (25) comprising a first nozzle (25a) for the compressed air, and a second nozzle (25b) for drawing up the liquid, which is directly connected to the separation chamber (15) through the recycling connection (27,28) and is perpendicular to the first nozzle (25a).

2. A device according to claim 1, characterised in that the first nozzle (25a) is inclined to the duct (19) and opens into the latter in the direction of the separation chamber (15).

3. A sandblasting machine for use in dental mechanics, of the type comprising a support structure (10), a sandblasting chamber (11), and an aperture (21) for drawing the air from the chamber (11), characterised in that it also includes a cleansing device according to claim 1 wherein the air-discharge duct (19) communicates with said sandblasting chamber (11) through the aperture (21) for washing out the abrasive powders suspended in the air discharged from the chamber (11).

4. A sandblasting machine according to claim 3, characterised in that the separation chamber (15) has an auxiliary, permanent air-outlet duct (24) which projects from the top of the support structure (10).

5. A sandblasting machine according to claim 3 or claim 4, characterised in that it includes a level-monitoring device (L) associated with the separation chamber (15) and adapted to provide a warning signal (30) when the level falls beyond a predetermined value.

## Patentansprüche

1. Reinigungsvorrichtung, die mit einem Sandstrahlgebläse vereinigt werden kann, das bei Zahntechnikern verwendet wird, wobei die Vorrichtung enthält:
eine im wesentliche senkrechte Luftauslaßleitung (19), die mit der Sandstrahlkammer des Gebläses in Verbindung steht;
eine Flüssigkeit/Luft-Trennkammer (15), die mit der Leitung (19) in Verbindung steht; und
eine Wiederumlauf-Verbindung (25b, 27, 28), die zwischen der Trennkammer (15) und der Ablaßleitung (19) vorgesehen ist;
dadurch gekennzeichnet, daß die Vorrichtung eine Auswerfeinrichtung(25) aufweist, die mit der Auslaßleitung (19) in Verbindung steht und als Primärfluid Druckluft sowie als Sekundärfluid eine Flüssigkeit enthält, die aus der Trennkammer (15) abgezogen wird, wobei die Auswerfeinrichtung (25) eine erste Düse (25a) für die Druckluft sowie eine zweite Düse (25b) zum Abziehen der Flüssigkeit enthält, wobei diese mit der Trennkammer (15) über die Wiederumlauf-Verbindung (27, 28) direkt in Verbindung steht und senkrecht zur ersten Düse (25a) liegt.

2. Vorrichtung gemäß Anspruch 1, dadurch gekennzeichnet, daß die erste Düse (25a) zur Leitung (19) geneigt ist und sich in diese in Richtung zur Trennkammer (15) öffnet.

3. Sandstrahlgebläse, das in der Zahntechnik verwendet wird, wobei das Gebläse einen Tragaufbau (10), eine Sandstrahlkammer (11) sowie eine Öffnung (21) enthält, um die Luft aus der Kammer (11) abzuziehen, dadurch gekennzeichnet, daß das Gebläse weiters eine Reinigungsvorrichtung gemäß Anspruch 1 aufweist, wobei die Luftauslaßleitung (19) mit der Sandstrahlkammer (11) über die Öffnung (21) in Verbindung steht, um das Schleifpulver auszuwaschen, das in der aus der Kammer (11) abgelassenen Luft suspendiert ist.

4. Sandstrahlgebläse gemäß Anspruch 3, dadurch gekennzeichnet, daß die Trennkammer (15) eine dauernde Luftabzug-Hilfsleitung (24) besitzt, die oben aus dem Tragaufbau (10) vorspringt.

5. Sandstrahlgebläse gemäß Anspruch 3 oder 4, dadurch gekennzeichnet, daß das Gebläse eine Pegelüberwachungs-Einrichtung (L) aufweist, die der Trennkammer (15) zugeordnet und so aufgebaut ist, um ein Warnsignal (30) zu liefern, wenn der Pegel unter einen vorgegebenen Wert fällt.

## Revendications

1. Dispositif de purification pour association avec une machine de sablage pour emploi en mécanique dentaire, du type comportant:
- une gaine (19) d'évacuation de l'air, sensiblement verticale, qui communique avec la chambre de sablage de la machine,
- une chambre (15) de séparation liquide-air qui communique avec la gaine (19), et
- une liaison de recyclage (25b, 27, 28) prévue entre la chambre de séparation (15) et la gaine d'évacuation (19),
dispositif caractérisé par le fait qu'il comporte un dispositif éjecteur (25) qui communique avec la gaine d'évacuation (19) et présente de l'air comprimé comme fluide primaire et du liquide aspiré dans la chambre de séparation (15) comme fluide secondaire, ledit dispositif éjecteur (25) comportant une première buse (25a) pour l'air comprimé et une seconde buse (25b) qui est prévue pour aspirer le liquide, qui est directement reliée à la chambre de séparation (15) par l'intérmédiaire de la liaison de recyclage (27, 28) et qui est perpendiculaire à la première buse (25a).

2. Dispositif selon la revendication 1, caractérisé par le fait que la première buse (25a) est inclinée par rapport à la gaine (19) et s'ouvre dans cette dernière dans la direction de la chambre de séparation (15).

3. Machine de sablage pour emploi en mécanique dentaire, du type comportant une structure support (10), une chambre de sablage (11) et une ouverture (21) pour aspirer l'air dans la chambre (11), caractérisée en ce qu'elle comporte également un dispositif de purification conforme à la revendication 1 dans lequel la gaine (19) d'évacuation de l'air communique avec ladite chambre de sablage (11) par l'intermédiaire de l'ouverture (21) pour éliminer, par lavage, les poussières d'abrasif suspendues dans l'air évacué de la chambre (11).

4. Machine de sablage selon la revendication 3, caractérisée par le fait que la chambre de séparation (15) comporte une gaine auxiliaire (24) d'évacuation permanente de l'air qui déborde de la partie supérieure de la structure support (10).

5. Machine de sablage selon la revendication 3 ou la revendication 4, caractérisée par le fait qu'elle comporte un dispositif (L) de surveillance du niveau associé à la chambre de séparation (15) et conçu pour fournir un signal d'avertissement (30) lorsque le niveau tombe en dessous d'une valeur prédéterminée.
